# DEMANDE DE BREVET EUROPEEN

(11) **EP 4 403 726 A1**
(43) Date de publication de la demande: **24.07.2024**
(21) Numéro de dépôt: 23305069.9
(22) Date de dépôt: 20.01.2023
(51) Int. Cl.: E04H 6/02, H02S 20/23, H02S 20/10

(54) **OMBRIÈRE**

(71) Demandeur: Adiwatt, 41270 Fontaine-Raoul (FR); Zelin, 31100 Toulouse (FR)
(72) Inventeur: NIVOCHE, Mathieu, 41100 St Firmin des Prés (FR); DAVOUST, Stéphane, 37250 Veigne (FR); SENTER, Julien, 31100 Toulouse (FR); VITET, Julien, 31100 Toulouse (FR); POLETTI, Simon, 31100 Toulouse (FR)
(74) Mandataire: Cabinet Beau de Loménie

(57) **Abrégé**

Ombrière (10), en particulier pour le support de panneaux photovoltaïques, comprenant une structure de toit (12) inclinée de façon à présenter une partie haute (14) et une partie basse (18), et une pluralité de poteaux (24) pour l'ancrage au sol (22) de la structure de toit (12), lesdits poteaux (24) soutenant la structure de toit (12) au niveau de la partie haute (14), l'ombrière (10) comprenant en outre au moins une paroi d'équilibrage (30) soutenue mécaniquement au moins par un des poteaux (24) et s'étendant en direction d'un autre des poteaux (24), l'au moins une paroi d'équilibrage (30) obturant 75% ou moins de la surface séparant ces deux poteaux (24).

## Description

### Domaine technique

Le présent exposé concerne une ombrière, et plus particulièrement une ombrière présentant une résistance améliorée au vent.

### Technique antérieure

Une ombrière est un dispositif destiné à fournir de l'ombre et comprenant une structure de toit montée sur des supports. Ces dernières années, l'usage d'ombrières s'est largement développé aussi bien dans l'agriculture, pour apporter de l'ombre à certaines plantes, que dans le secteur de l'énergie, les ombrières servant de support en hauteur pour des panneaux photovoltaïques. On parle même parfois de système agrivoltaïque lorsque ces deux applications sont combinées.

Le succès des ombrières a conduit à leur installation dans des zones soumises à de forts vents. Les ombrières nécessitent alors un ancrage lourd au sol, ce qui n'est souhaitable ni en termes de facilité d'installation, ni en termes d'occupation des sols, ni en termes de coûts. Il existe donc un besoin pour un nouveau type d'ombrière.

### Exposé de l'invention

A cet effet, le présent exposé concerne une ombrière, en particulier pour le support de panneaux photovoltaïques, comprenant une structure de toit inclinée de façon à présenter une partie haute et une partie basse, et une pluralité de poteaux pour l'ancrage au sol de la structure de toit, lesdits poteaux soutenant la structure de toit au niveau de la partie haute, l'ombrière comprenant en outre au moins une paroi d'équilibrage soutenue mécaniquement au moins par un des poteaux et s'étendant en direction d'un autre des poteaux, l'au moins une paroi d'équilibrage obturant 75% ou moins de la surface séparant ces deux poteaux.

Le cas échéant, la structure de toit peut être configurée pour recevoir les panneaux photovoltaïques. Par exemple, la structure de toit peut comprendre des moyens de fixation dédiés. La structure de toit peut comprendre des éléments structuraux, configurés pour reprendre les efforts s'exerçant sur l'ombrière et en assurer la tenue mécanique, tels qu'une panne ou une traverse, et des éléments non structuraux, tels que des moyens de fixation de panneaux photovoltaïques, typiquement des rails.

A l'opposé de la structure de toit, les poteaux peuvent présenter une extrémité du côté du sol, parfois appelée pied de poteau. Cette extrémité est libre. L'ancrage au sol, typiquement par cette extrémité libre, peut être direct ou indirect, par exemple par l'intermédiaire de maçonneries, de blocs posés au sol, etc. L'ancrage est tel que la partie basse de la structure de toit est à distance du sol, et la partie haute est plus éloignée du sol que la partie basse. Le sol peut être une partie naturelle ou aménagée, au niveau du terrain environnant ou bien formé par un plancher d'une construction, surélevé ou non, typiquement un plancher de parking ou un toit-terrasse.

La structure de toit s'étend entre une extrémité haute et une extrémité basse. La partie haute, soutenue par les poteaux, s'étend depuis l'extrémité haute en direction de l'extrémité basse. Inversement, la partie basse, qui peut être libre, s'étend depuis l'extrémité basse en direction de l'extrémité haute.

L'au moins une paroi d'équilibrage étant soutenue mécaniquement par au moins un des poteaux, la paroi d'équilibrage est apte à transmettre les efforts qui s'y appliquent à ce poteau, indépendamment de la façon dont la paroi d'équilibrage est fixée à ce poteau ou du chemin suivi par les efforts transmis.

L'au moins une paroi d'équilibrage obture 75% ou moins de la surface séparant le poteau par lequel elle est mécaniquement soutenue, et un autre poteau vers lequel elle s'étend. Cette proportion de surface obturée est aussi appelée taux d'obturation.

Dans le cas où il est prévu plusieurs parois d'équilibrage, le taux d'obturation est calculé comme la proportion de la surface entre les deux poteaux qui est obturée par au moins une paroi d'équilibrage. Le taux d'obturation peut s'exprimer comme le rapport de la surface obturée entre les deux poteaux sur la surface totale entre les deux poteaux.

De plus, en bord d'ombrière, une paroi d'équilibrage peut être soutenue mécaniquement par un poteau et s'étendre vers l'extérieur de l'ombrière. La surface obturée par cette paroi d'équilibrage à l'extérieur de l'ombrière peut être ajoutée, pour le calcul du taux d'obturation, à la surface obturée de l'autre côté du poteau concerné.

Si l'ombrière comprend plus de deux poteaux, le taux d'obturation se définit, de même que ci-dessus, comme le rapport de la somme des surfaces obturées par au moins une paroi d'équilibrage sur la somme des surfaces séparant tous les poteaux de l'ombrière. En d'autres termes, le taux d'obturation correspond à un taux d'obturation moyen ou global sur l'ensemble de l'ombrière, par opposition à un taux d'obturation local qui serait calculé uniquement entre deux poteaux consécutifs. A noter que, lorsque l'ombrière comprend plus de deux poteaux, le taux d'obturation local peut varier d'une parie de poteaux consécutifs à l'autre, bien que le critère de taux d'obturation global inférieur ou égal à 75% reste respecté. Des exemples seront donnés par la suite.

Dans le présent exposé, et sauf indication contraire, par « un » ou « l' »élément (par exemple poteau, paroi d'équilibrage, etc.), on entend « au moins un » ou « l'au moins un » ou encore « chaque » élément. Réciproquement, l'emploi générique du pluriel peut inclure le singulier.

Grâce au fait que les poteaux soutiennent la structure de toit au niveau de la partie haute et que l'au moins une paroi d'équilibrage obture 75% ou moins de la surface séparant le poteau par lequel elle est mécaniquement soutenue, et un autre poteau vers lequel elle s'étend, les effets du vent sur l'ombrière sont atténués. En effet, lorsque le vent souffle du côté de la partie haute vers le côté de la partie basse, l'effet du vent sur la structure de toit crée généralement au point d'ancrage (par exemple au sol) un moment principal qui tend à faire basculer l'ombrière du côté de la partie haute. Toutefois, l'impact du vent sur la paroi d'équilibrage crée simultanément, au point d'ancrage, un moment antagoniste qui tend à faire basculer l'ombrière du côté de la partie basse et compense donc, au moins en partie, le moment principal. Un phénomène similaire se produit lorsque le vent souffle dans le sens inverse, le sens de chaque moment étant inversé. Dans les deux cas, la paroi d'équilibrage est configurée pour réduire le moment résultant au point d'ancrage sous l'effet du vent, de sorte que le moment résultant au point d'ancrage peut être significativement plus faible qu'en l'absence de paroi d'équilibrage, étant précisé qu'un taux d'obturation supérieur à 75% entraînerait une compensation excessive du moment principal.

L'ombrière proposée repose donc sur l'idée contre-intuitive qu'en ajoutant une paroi ayant une certaine prise au vent, le moment de flexion en pied de poteau, et plus généralement la sensibilité au vent de l'ensemble de l'ombrière, peuvent être diminués. Par conséquent, l'ancrage au sol de l'ombrière peut être dimensionné de manière moins pénalisante, y compris dans les zones de fort vent. Il s'ensuit des gains de facilité d'installation, d'occupation du sol et de coûts.

Dans certains modes de réalisation, la paroi d'équilibrage s'étend d'un des poteaux à un autre des poteaux. En particulier, la paroi d'équilibrage peut être fixée sur chacun desdits poteaux. Alternativement ou en complément, la paroi d'équilibrage peut comprendre des moyens pour sa fixation au sol, tels que des attaches ou équivalent.

Dans certains modes de réalisation, la paroi d'équilibrage est fixée d'un côté des poteaux opposé au côté où s'étend la partie basse. Alternativement, la paroi d'équilibrage peut être fixée du même côté que la partie basse, voire encore en travers d'un poteau.

Dans certains modes de réalisation, la paroi d'équilibrage est prévue à distance d'au moins une des extrémités des poteaux entre lesquels elle s'étend, de préférence à distance des deux extrémités. En d'autres termes, la paroi d'équilibrage peut être prévue à distance de l'extrémité inférieure (extrémité d'ancrage au sol) d'un poteau, de l'extrémité supérieure (soutenant la structure de toit) d'un poteau, ou des deux.

Alternativement, la paroi d'équilibrage pourrait s'étendre depuis les deux extrémités des poteaux. Dans ce cas, un taux d'obturation inférieur ou égal à 75% peut être obtenu par un ou plusieurs ajours de la paroi d'équilibrage, par exemple.

Dans certains modes de réalisation, la paroi d'équilibrage obture 70% ou moins de la surface séparant lesdits deux poteaux, de préférence 60% ou moins, de préférence 50% ou moins, de préférence 40% ou moins, de préférence 30% ou moins, de préférence 20% ou moins.

Dans certains modes de réalisation, la paroi d'équilibrage obture au moins 2% de la surface séparant lesdits deux poteaux, de préférence au moins 5%, de préférence au moins 7%, de préférence au moins 10%, de préférence au moins 15%, de préférence au moins 20%.

Dans certains modes de réalisation, la partie basse de la structure de toit s'étend en porte-à-faux par rapport aux poteaux. Ainsi, l'extrémité basse de la structure de toit est une extrémité libre, et la partie basse peut ne pas être soutenue par des poteaux autrement que via la partie haute. L'effet de la paroi d'équilibrage est d'autant plus avantageux dans de telles configurations.

Dans certains modes de réalisation, les poteaux sont agencés en une unique rangée. Cette rangée peut s'étendre transversalement à la direction reliant la partie haute et la partie basse de la structure de toit.

Dans certains modes de réalisation, la hauteur de la paroi d'équilibrage est comprise entre 2 % et 100 % de la hauteur des poteaux, de préférence entre 20% et 90%, de préférence encore entre 40% et 80%. La direction de hauteur peut être mesurée le long des poteaux.

Dans certains modes de réalisation, la distance entre la paroi d'équilibrage et l'extrémité libre des poteaux est comprise entre 0 % et 98% de la hauteur des poteaux. L'extrémité libre des poteaux est l'extrémité destinée à être ancrée au sol, ainsi, la distance entre la paroi d'équilibrage et l'extrémité libre des poteaux est représentative de la distance de la paroi d'équilibrage au sol, abstraction faite du dispositif d'ancrage.

Dans certains modes de réalisation, la paroi d'équilibrage s'étend au maximum dans le tiers supérieur, optionnellement dans le quart supérieur, de la hauteur des poteaux. Ainsi, un espace reste accessible en-dessous de la paroi d'équilibrage, par exemple un espace de circulation pour des véhicules ou des piétons, ou encore un espace de croissance pour des plantes.

Dans certains modes de réalisation, en projection sur les poteaux, la partie basse est située à au moins deux mètres, de préférence au moins deux mètres et demi, de l'extrémité libre des poteaux.

Dans certains modes de réalisation, la structure de toit forme avec les poteaux un angle strictement supérieur à 0° et inférieur ou égal à 90°. Plus précisément, l'angle peut être compris entre 60° et 90°, voire entre 65° et 87°.

Dans certains modes de réalisation, la paroi d'équilibrage est verticale. Alternativement ou en complément, la paroi d'équilibrage peut s'étendre dans la même direction que les poteaux.

Notamment, la paroi d'équilibrage peut être inclinée par rapport à la verticale, d'un angle compris strictement entre 0° et 90°. En particulier, la paroi d'équilibrage peut être inclinée dans le sens inverse du sens d'inclinaison de la structure de toit, par rapport aux poteaux. Selon un exemple, plusieurs parois d'équilibrage inclinées peuvent être agencées en persienne. Par ailleurs, la paroi d'équilibrage peut avoir un angle d'inclinaison variable en fonction du vent qui souffle contre cette paroi d'équilibrage. L'angle d'inclinaison variable peut être borné par au moins une butée.

### Brève description des dessins

D'autres caractéristiques et avantages de l'objet du présent exposé ressortiront de la description suivante de modes de réalisation, donnés à titre d'exemples non limitatifs, en référence aux figures annexées.
Les Fig. 1A-1D représentent schématiquement plusieurs configurations d'ombrières, vues de côté.
La figure 2A, la figure 2B, la figure 2C, la figure 2D, la figure 2E, la figure 2F, la figure 2G, la figure 2H, la figure 2I, la figure 2J, la figure 2K, la figure 2L, la figure 2M et la figure 2N représentent, en vue de face, différents modes de réalisation de paroi d'équilibrage pour une ombrière à plusieurs travées.
La figure 3A, la figure 3B, la figure 3C, la figure 3D, la figure 3E, la figure 3F, la figure 3G, la figure 3H, la figure 3I, la figure 3J, la figure 3K et la figure 3L représentent, en vue de face, d'autres modes de réalisation de paroi d'équilibrage, illustrés pour une travée unique.

### Description détaillée

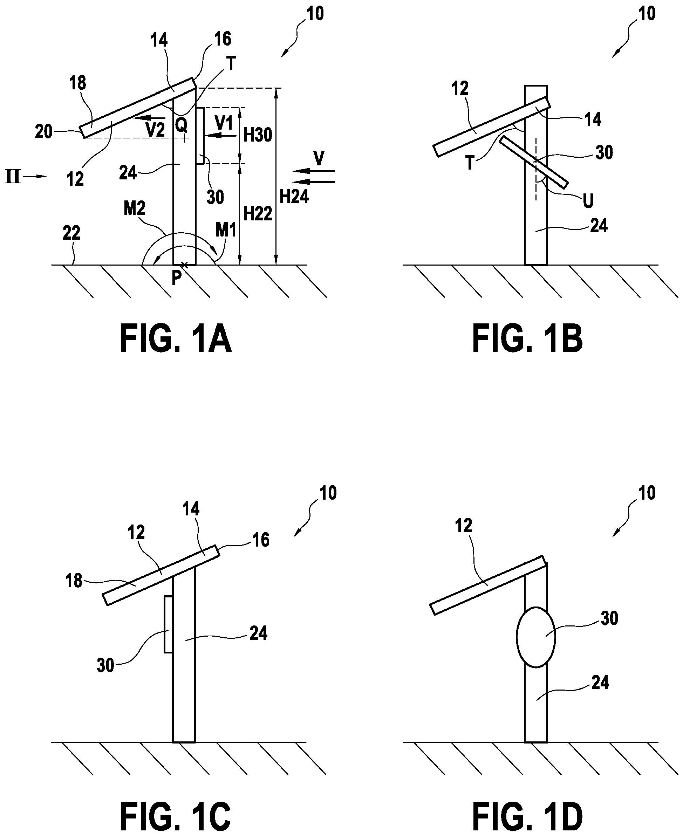

Une ombrière 10 est décrite en référence aux Fig. 1A-1D, plus particulièrement à la vue A selon un premier mode de réalisation.

L'ombrière 10 comprend une structure de toit 12 destinée à faire de l'ombre. Afin de tirer parti de la lumière qui l'atteint, la structure de toit 12 peut notamment être prévue pour le support de panneaux solaires, par exemple photovoltaïques. Les panneaux photovoltaïques peuvent être fixés par des moyens à la disposition de l'homme du métier et ne seront donc pas décrits en eux-mêmes, ainsi que leurs moyens de fixation.

La structure de toit 12 peut être pleine ou ajourée, néanmoins, pour la suite du présent exposé, on considère que la structure de toit 12, éventuellement munie de panneaux photovoltaïques ou d'autres équipements souhaités, présente une certaine résistance au vent.

Comme il ressort de la vue A, la structure de toit 12 est inclinée de façon à présenter une partie haute 14, qui s'étend depuis une extrémité haute 16, et une partie basse 18, qui s'étend depuis une extrémité basse 20. La partie haute 14 est plus haute que la partie basse 18 par rapport au sol 22 dans lequel l'ombrière 10 est ancrée. La partie haute 14 et la partie basse 18 peuvent représenter chacune la moitié de la structure de toit 12, voire le tiers, voire encore le quart.

Pour son ancrage au sol, l'ombrière 10 comprend une pluralité de poteaux 24. En l'occurrence, les poteaux 24 sont agencés en une unique rangée, c'est pourquoi seul l'un d'entre eux est visible sur les Fig. 1A-1D. Toutefois, plusieurs rangées pourraient être prévues. Par la suite, ce qui est décrit pour un poteau 24 peut se transposer aux autres poteaux.

Dans ce mode de réalisation, le poteau 24 vertical est ancré dans le sol 22 verticalement, mais le poteau 24 pourrait avoir d'autres orientations. On a représenté le point d'ancrage P de manière schématique, mais l'homme du métier sait que ce point d'ancrage P peut être mis en oeuvre à l'aide de fondations, renforts, contrepoids ou autres techniques appropriées.

Le poteau 24 soutient la partie haute 14 de la structure de toit 12. En l'espèce, la partie haute 14 est fixée à l'extrémité supérieure du poteau 24. La Fig. 1A-1D montre un unique point de fixation, mais le poteau 24 pourrait être muni d'un ou plusieurs bras pour soutenir la partie haute 14 en plusieurs points. Dans ce mode de réalisation, l'extrémité haute 16 de la structure de toit 12 est soutenue par le poteau 24.

La partie basse 18 de la structure de toit 12 s'étend en porte-à-faux par rapport au poteau 24. La partie basse 18 peut être libre, à savoir d'une part dénuée de tout soutien direct par rapport au poteau 24, d'autre part à distance du sol 22. Typiquement, en projection sur le poteau 24, la partie basse 18 peut être située à au moins deux mètres, de préférence au moins deux mètres et demi, de l'extrémité libre du poteau 24. Cette distance correspond à la longueur du segment de droite [PQ] sur la vue A des Fig. 1A-1D.

La structure de toit 12, inclinée, forme un angle T avec le poteau 24. Cet angle T est strictement supérieur à 0° et inférieur ou égal à 90°. En l'occurrence, l'angle T vaut environ 80°. L'angle T peut notamment être supérieur à 45°, de préférence à 60°, de sorte que la composante horizontale de la structure de toit 12 soit plus grande que la composante verticale. L'angle T peut notamment être inférieur à 87°. De manière générale, la structure de toit 12 peut former un angle de 0° à 30° avec l'horizontale.

Pour renforcer sa résistance au vent, en particulier réduire le moment de flexion en pied de poteau, et alléger sa structure d'ancrage au sol, l'ombrière 10 comprend en outre au moins une paroi d'équilibrage 30. Comme illustré, la paroi d'équilibrage 30 est soutenue mécaniquement par un poteau 24, par exemple en étant fixée à ce poteau 24. En outre, comme on le verra par la suite, la paroi d'équilibrage 30 s'étend entre deux poteaux 24 de manière à former un obstacle au passage du vent.

En présence d'un vent V, que l'on a représenté soufflant de la droite vers la gauche de la vue A, une partie V1 du vent V qui impacte la paroi d'équilibrage 30 génère une force aérodynamique (de type portance ou déportance). La paroi d'équilibrage 30 transmet donc une force correspondante sur le poteau 24. Le poteau 24 étant ancré dans le sol, il se crée, au point d'ancrage P, un moment M1 qui tend à faire pivoter le poteau 24 autour du point d'ancrage, vers la gauche (ou plus généralement dans le sens du vent V, tel qu'illustré sur la figure 1A). L'ombrière 10 tend ainsi à basculer vers la gauche. Par ailleurs, une partie V2 du vent V impacte la structure de toit 12. La structure de toit 12 étant inclinée, l'écoulement du vent autour de la structure de toit 12 génère une force aérodynamique (de type portance ou déportance), ce qui crée, au point d'ancrage P, un moment M2 qui tend à faire pivoter le poteau 24 autour du point d'ancrage P, vers la droite (ou plus généralement dans le sens inverse au vent V, tel qu'illustré sur la figure 1A). L'ombrière 10 tend ainsi à basculer vers la droite.

Grâce au fait que la paroi d'équilibrage 30 crée, au point d'ancrage P, un moment M1 antagoniste au moment principal M2 qui prend son origine sur la structure de toit 12, le moment résultant s'appliquant sur le poteau 24 par rapport au point d'ancrage P est réduit. La réduction de moment obtenue par rapport au moment principal M2 dans les cas les plus défavorables peut atteindre plusieurs dizaines de pourcents.

Ce principe se transpose mutatis mutandis à un vent V contraire allant de la gauche vers la droite sur la figure, les moments M1 et M2 générés étant alors respectivement de sens inverse.

Selon un exemple, la hauteur H30 de la paroi d'équilibrage est comprise entre 2 % et 100% de la hauteur H24 du poteau 24, de préférence entre 20% et 90%, voire entre 40% et 80%. Les hauteurs sont mesurées selon la direction longitudinale du poteau 24, ce qui correspond à la direction verticale lorsque le poteau 24 est lui-même vertical.

Par ailleurs, la distance H22 entre la paroi d'équilibrage 30 et l'extrémité libre du poteau, en l'occurrence le point d'ancrage P, est comprise entre 0 et 98% de la hauteur H24 des poteaux.

Selon un exemple, la paroi d'équilibrage 30 s'étend au maximum dans le tiers supérieur, optionnellement dans le quart supérieur, de la hauteur H24 du poteau. En d'autres termes, la hauteur H22 est supérieure ou égale à 2/3, voire 3/4 de la hauteur H24 du poteau 24.

Comme illustré, la paroi d'équilibrage 30 peut être prévue à distance d'au moins une des extrémités du poteau 24, en l'occurrence à distance des deux extrémités. En utilisant les notations précédentes, cela se traduit par l'inégalité H22+H30<H24. La paroi d'équilibrage 30 peut être prévue intégralement sous la structure de toit 12, mais l'extrémité supérieure de la paroi d'équilibrage 30 peut être plus basse ou, comme illustré, plus haute que l'extrémité basse 20 de la structure de toit 12.

Comme illustré sur la vue A, la paroi d'équilibrage 30 peut être agencée d'un côté du poteau 24 opposé à la partie basse 18. Par ailleurs, la paroi d'équilibrage 30 peut être verticale, et plus particulièrement parallèle au poteau 24. Toutefois, ces caractéristiques peuvent être modifiées, ainsi que le montrent les autres vues de la Fig. 1A-1D.

Les vues B à D présentent l'ombrière dans d'autres modes de réalisation. Sur ces figures, les éléments correspondant ou identiques à ceux du mode de réalisation de la vue A recevront le même signe de référence et ne seront pas décrits à nouveau.

L'ombrière 10 de la vue B diffère de celle de la vue A en ce que la structure de toit 12 n'est pas soutenue à une extrémité du poteau 24, mais à une position intermédiaire sur le poteau 24. Le poteau 24 peut donc dépasser de la structure de toit 12. Toutefois, c'est bien la partie haute 14 de la structure de toit 12 qui est soutenue par le poteau 24.

En outre, la paroi d'équilibrage 30 n'est pas verticale, mais inclinée par rapport au poteau. Plus particulièrement, la paroi d'équilibrage 30 peut former, avec le poteau, un angle U supérieur ou égal à 0° et inférieur ou égal à l'angle T entre la structure de toit 12 et le poteau 24. La paroi d'équilibrage 30 peut, notamment, être inclinée par rapport au poteau 24 dans un sens opposé à l'inclinaison de la structure de toit 12, comme l'illustre la vue B.

L'ombrière 10 de la vue C diffère de celle de la vue A en ce que la structure de toi 12 n'est pas soutenue à son extrémité haute 16, mais plus généralement sur sa partie haute 14. Ainsi, l'extrémité haute 16 et l'extrémité basse 20 de la structure de toit 12 sont situées de part et d'autre du poteau 24.

Par ailleurs, la paroi d'équilibrage 30 est ici agencée du même côté du poteau 24 que la partie basse 18.

L'ombrière 10 de la vue D diffère de celle de la vue A en ce que la paroi d'équilibrage 30 n'est pas plane. La paroi d'équilibrage 30 est ici bombée, et peut, pour ce faire, avoir un profil elliptique, semi-elliptique, plus généralement bombé dans un sens et/ou dans l'autre, ou tout autre profil adapté. Un tel profil permet de dimensionner avec précision la résistance au vent de la paroi d'équilibrage 30.

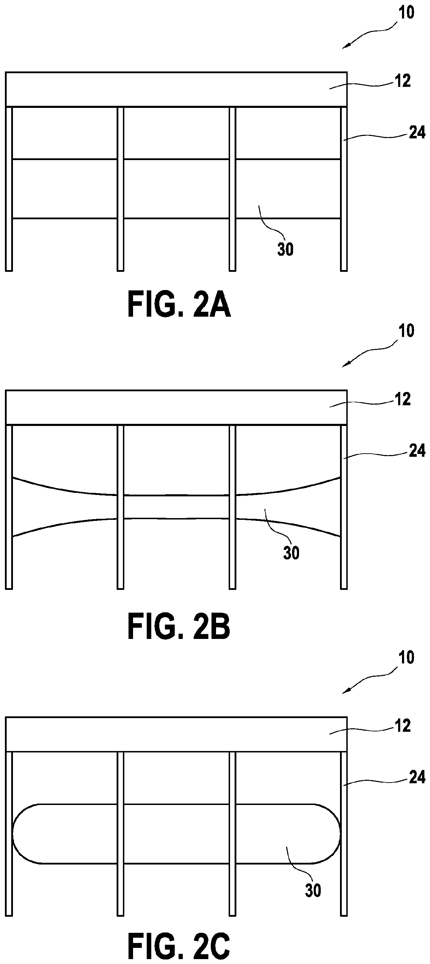

Les figures 2A à 2M illustrent différents modes de réalisation pour la paroi d'équilibrage 30, vue dans la direction II des Figs. 1A-1D et pour un exemple d'ombrière 10 comprenant trois travées définies par une rangée de quatre poteaux 24. Toutefois, ces exemples se transposent à tout autre nombre de poteaux 24.

Dans l'exemple de la figure 2A, les parois d'équilibrage 30 sont identiques d'une travée à l'autre. Chaque paroi d'équilibrage 30 s'étend d'un poteau 24 à un poteau 24 adjacent. Plus généralement, la paroi d'équilibrage 30 est soutenue mécaniquement par un poteau 24 et s'étend en direction d'un autre poteau. En l'espèce, la paroi d'équilibrage 30 est soutenue mécaniquement par les deux poteaux 24 adjacents.

La paroi d'équilibrage 30 obture 75% ou moins de la surface séparant le poteau 24 qui la soutient du poteau 24 vers lequel elle s'étend. Sur la figure 2A, la paroi d'équilibrage 30 obture environ un tiers de cette surface. Dans d'autres modes de réalisation, le taux d'obturation maximum peut être de 70%, 60%, 50%, 40%, 30% voire encore 20%.

Par ailleurs, le ratio du maître couple de la paroi d'équilibrage 30 sur le maître couple de la structure de toit 12 peut être inférieur ou égal à 5, de préférence à 4, de préférence encore à 3. On rappelle que le maître couple d'une surface désigne la projection de cette surface sur un plan perpendiculaire à l'écoulement, en l'occurrence sur le plan des poteaux 24 qui peut être considéré comme transversal à l'écoulement du vent dans les scénarios les plus défavorables. Le ratio précité peut être supérieur ou égal à 0,01, de préférence à 0,05, de préférence encore à 0,1.

La paroi d'équilibrage 30 a ici une forme rectangulaire et est agencée environ à mi-hauteur des poteaux 24.

La variante de la figure 2B illustre que les parois d'équilibrage 30 peuvent ne pas être identiques les unes aux autres. En outre, les formes ne sont pas nécessairement rectangulaires, comme l'illustrent les parois d'équilibrage 30 externes dont les bords sont définis par des courbes concaves. La figure 2C donne l'exemple de courbes convexes. Dans ces modes de réalisation, on note toutefois une continuité de forme d'une travée à l'autre pour les parois d'équilibrage 30.

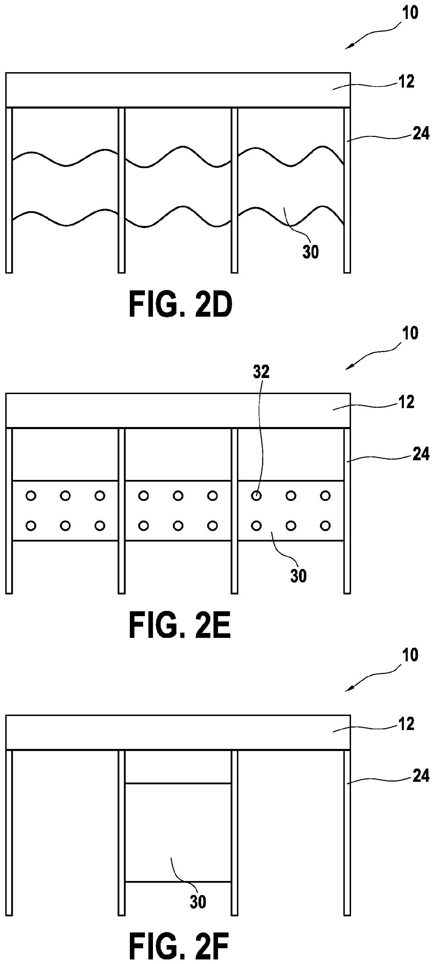

La figure 2D illustre des parois d'équilibrage 30 dont les bords dans le sens de la hauteur sont définies par des ondulations, ou toute autre fonction périodique. Optionnellement, comme illustré, les parois d'équilibrage 30 restent néanmoins identiques les unes aux autres et/ou continues d'une travée à l'autre.

La figure 2E montre un exemple où la paroi d'équilibrage 30 est ajourée, ici grâce à des perçages 32. Les perçages 32 peuvent être circulaires ou non, et régulièrement agencés ou non, étant toutefois précisé qu'une distribution régulière assure des efforts réguliers d'un poteau 24 à l'autre sous l'effet du vent.

La figure 2F illustre que certaines travées peuvent être munies d'une paroi d'équilibrage 30, tandis que d'autres ne le sont pas.

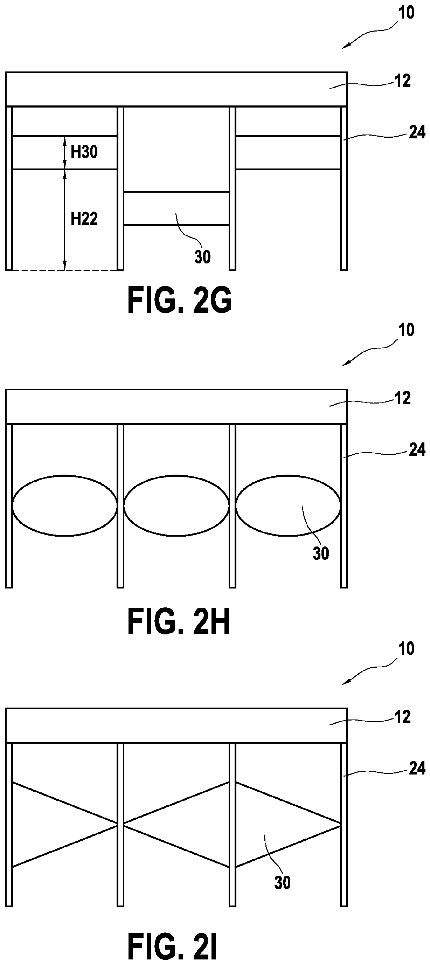

Tandis que dans les modes de réalisation précédents, toutes les parois d'équilibrage 30 étaient situées à la même hauteur, la figure 2G illustre que la hauteur H22 des parois d'équilibrage 30 par rapport à l'extrémité libre des poteaux 24 peut varier d'une travée à l'autre. Bien entendu, la hauteur H30 des parois d'équilibrage peut également varier, bien que ce ne soit pas le cas ici.

La figure 2H montre des parois d'équilibrage 30 chacune elliptique. Cela illustre que les parois d'équilibrage 30 peuvent être indépendantes d'une travée à l'autre, alors que dans d'autres modes de réalisation tels que ceux des figures 2B et 2C, les parois d'équilibrage peuvent être connectées les unes aux autres, voire être formées d'une seule et même pièce.

Bien entendu, les deux possibilités peuvent être combinées, comme le montre la figure 2I : une paroi d'équilibrage 30 monobloc, par exemple en forme de parallélogramme voire de losange, peut s'étendre sur deux travées, tandis qu'une autre paroi d'équilibrage 30 est prévue pour la troisième travée.

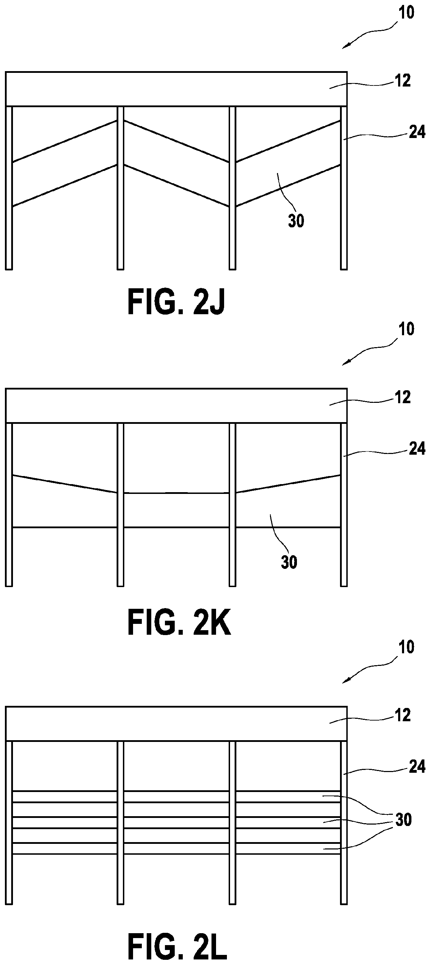

Comme illustré sur la figure 2J, une paroi d'équilibrage 30 donnée peut être agencée à des hauteurs différentes d'un poteau 24 à l'autre, et ce de manière continue d'une travée à l'autre, comme illustré, ou non. Cela peut permettre de répartir les efforts différemment d'un poteau 24 à l'autre.

En position relativement basse, la paroi d'équilibrage 30 peut servir accessoirement de support publicitaire, de barrière ou encore de support pour des équipements tels que des bornes de recharge de véhicules. Inversement, en position relativement haute, la paroi d'équilibrage 30 peut servir accessoirement de limiteur de hauteur, de support publicitaire ou autre, et permet le passage en-dessous.

L'exemple de la figure 2K est un mélange de celui des figures 2A et 2J, et atteste que les caractéristiques décrites à propos de chaque mode de réalisation peuvent être isolées et combinées pour former de nouveaux modes de réalisation. Dans ce mode de réalisation, les parois d'équilibrage 30 ont une forme trapézoïdale.

En référence à la figure 2L, plusieurs parois d'équilibrage 30 peuvent s'étendre dans une même travée. En l'occurrence, trois parois d'équilibrage 30, disjointes, sont prévues à des hauteurs différentes. Les parois d'équilibrage sont identiques en termes de forme et de dimensions et ne diffèrent ici que par leur emplacement, mais d'autres variations sont envisageables.

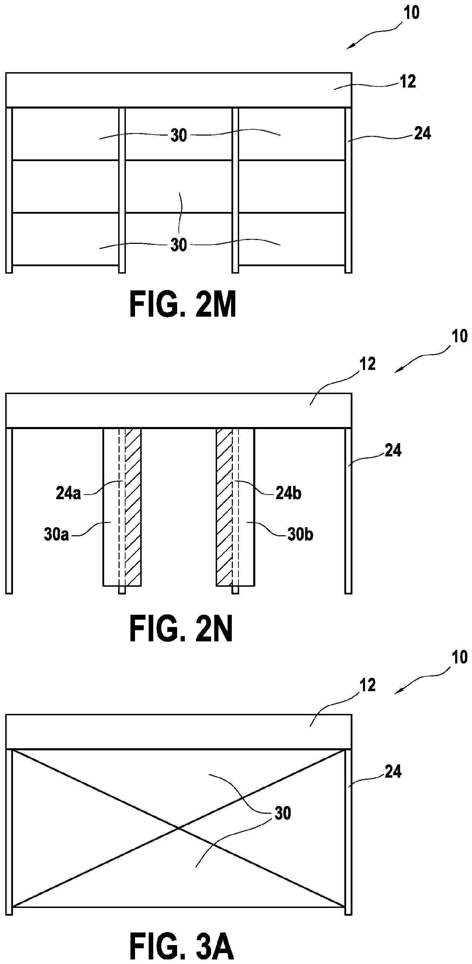

La figure 2M combine les principes des figures 2G et 2L : en agençant un nombre variable de parois d'équilibrage 30 dans chaque travée et en faisant varier les hauteurs de ces parois d'équilibrage 30, un motif prédéterminé peut être recréé, par exemple un motif de damier : les parois d'équilibrage 30 sont ici agencées en quinconce. D'autres motifs peuvent être envisagés.

La figure 2N illustre le fait qu'au lieu d'être agencées de manière globalement horizontale, les parois d'équilibrage 30 peuvent être agencées de manière globalement verticale. Plus précisément, dans ce mode de réalisation, une paroi d'équilibrage 30 est fixée sur un poteau 24 et fait saillie au-delà de ce poteau 24, de part et d'autre de ce poteau 24. La paroi d'équilibrage 30 s'étend donc en direction d'au moins un des poteaux voisins, ici les deux, sans toutefois les atteindre.

Au sein d'une travée définie entre un premier poteau 24a et un deuxième poteau 24b, le taux d'obturation est la somme du taux d'obturation lié à la paroi d'équilibrage 30a fixée sur le premier poteau 24a, pour sa partie qui s'étend vers le deuxième poteau 24b, et du taux d'obturation lié à la paroi d'équilibrage 30b fixée sur le deuxième poteau 24b, pour sa partie qui s'étend vers le premier poteau 24a. Les parties utiles des parois d'équilibrage 30a, 30b sont hachurées sur la figure 2N.

Ces exemples montrent donc que de nombreuses variations sont envisageables.

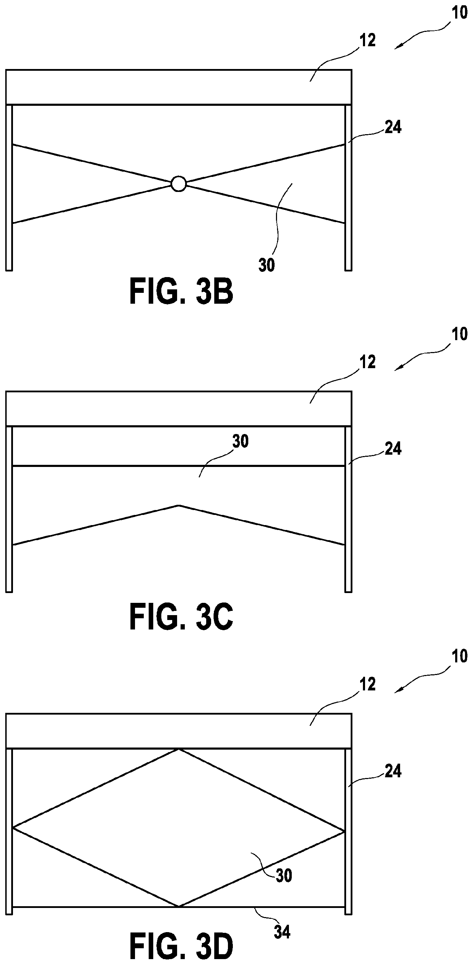

Plus généralement, les figures 3A à 3L illustrent, pour une travée, d'autres formes, types et agencement de paroi d'équilibrage 30. Ces modes de réalisation peuvent être étendus à plusieurs travées.

Par exemple, la figure 3A montre deux parois d'équilibrage 30 triangulaires se rejoignant en un de leurs sommets, tandis que les autres sommets servent de point de fixation sur les poteaux 24, chaque paroi d'équilibrage 30 ayant un sommet sur chaque poteau 24. Inversement, sur la figure 2B, chaque paroi d'équilibrage 30 triangulaire a deux sommets sur le même poteau 24.

La figure 3C illustre qu'outre les formes rectangulaires, parallélogrammes ou trapézoïdales vues précédemment, la paroi d'équilibrage 30 peut avoir une forme polygonale plus complexe, éventuellement concave.

La figure 3D montre une paroi d'équilibrage 30 en forme de losange. Lorsque cela est nécessaire, un câble ou une poutre de soutien 34 peut être prévu pour améliorer le soutien mécanique de la paroi d'équilibrage 30 par les poteaux 24. En l'occurrence, le câble de soutien 34 est tendu entre deux poteaux 24, ici adjacents, et la paroi d'équilibrage 30 est soutenue au moins en partie par ce câble de soutien 34, par exemple en étant fixée dessus, voire simplement engagée dessus. Par exemple, un coin du losange peut être soutenu par le câble de soutien 34, tandis que deux autres coins sont soutenus directement par les poteaux 24. Un câble de soutien 34 peut être prévu non seulement sous la paroi d'équilibrage 30 mais aussi au-dessus ou sur un côté, en fonction des besoins. En outre, ces caractéristiques sont transposables quelle que soit la forme de la paroi d'équilibrage 30.

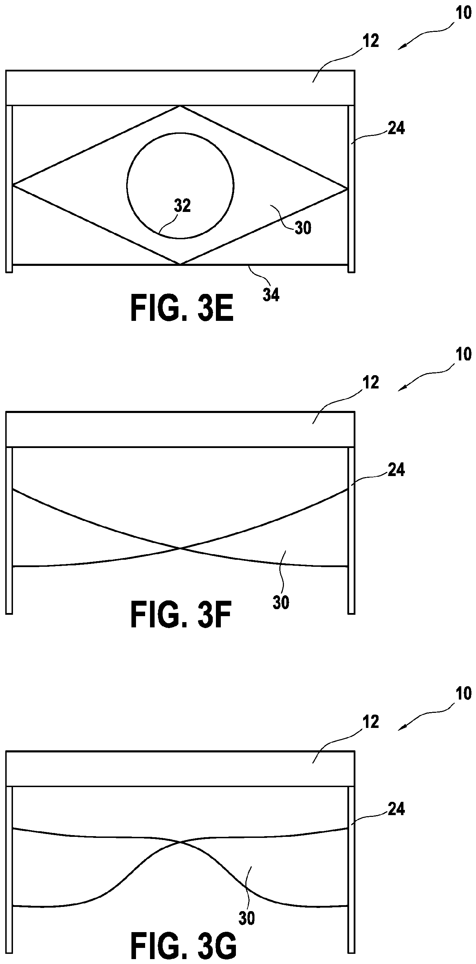

Le mode de réalisation de la figure 3E est similaire à celui de la figure 3D, hormis le fait que la paroi d'équilibrage 30 est ajourée par la présence d'un perçage 32.

Les figures 3F et 3G montrent que la paroi d'équilibrage peut avoir toute forme souhaitée, non seulement polygonale mais courbe, ou une combinaison des deux. Ici, en particulier, les bords de la paroi d'équilibrage 30 peuvent être définis par une fonction continue voire dérivable, par exemple polynomiale.

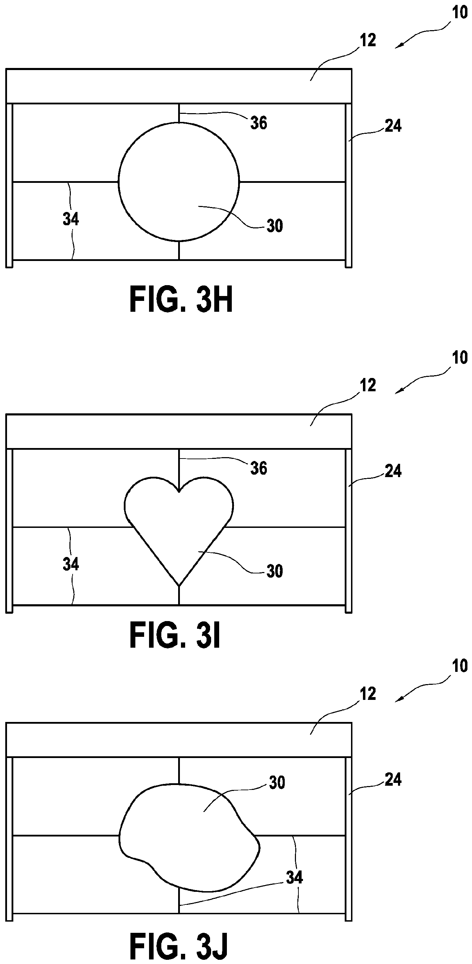

Dans le mode de réalisation de la figure 3H, la paroi d'équilibrage 30 est soutenue par rapport à l'un des poteaux 24, ici les deux poteaux 24, via un ou plusieurs câbles ou poutres de soutien 34. Lorsque le vent souffle sur la paroi d'équilibrage 30, celle-ci tend les câbles de soutien 34 qui transmettent alors un effort dans la même direction aux poteaux 34. Ainsi, la paroi d'équilibrage 30 peut n'être pas directement en contact avec les poteaux 24, dès lors que sa fixation lui permet d'être néanmoins mécaniquement soutenue par au moins un des poteaux 24.

Par ailleurs, si cela est désiré, un câble ou une poutre de soutien 36 peut connecter mécanique la paroi 30 à la structure de toit 12, notamment à un élément structural de la structure de toit 12.

Un tel mécanisme de soutien offre une plus grande liberté de conception pour la forme de la paroi d'équilibrage 30. Ainsi, la figure 3H montre une paroi d'équilibrage 30 circulaire, mais d'autres formes sont bien entendu possibles, telles que la forme de coeur de la figure 3I ou la forme quelconque de la figure 3J. En outre, le nombre de câbles de soutien 34 peut être modifié, de même que leur emplacement et leur direction. Pour mieux répartir les efforts entre les poteaux 24 et sur ces poteaux 24, il reste néanmoins souhaitable que la paroi d'équilibrage ait son centre de gravité centré par rapport aux poteaux 24, en largeur et/ou en hauteur.

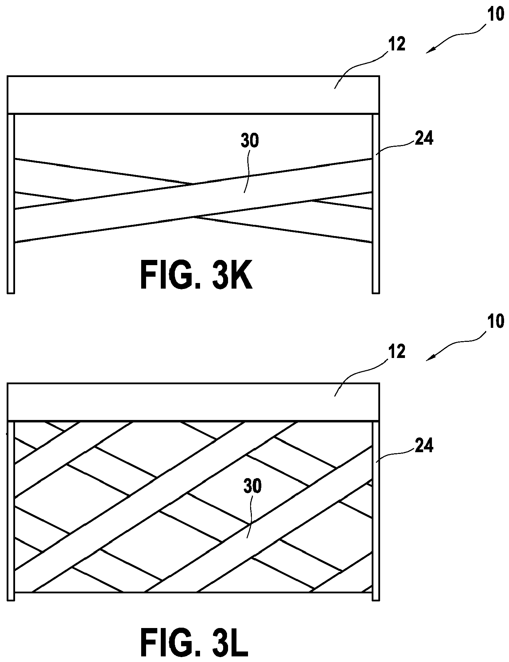

Par ailleurs, comme illustré sur la figure 3K, les parois d'équilibrage 30 peuvent se superposer. La figure 3L illustre un motif de type quadrillage qui peut être obtenu en répétant le motif unitaire de la figure 3K.

Bien que la présente description se réfère à des exemples de réalisation spécifiques, des modifications peuvent être apportées à ces exemples sans sortir de la portée générale de l'invention telle que définie par les revendications. Par exemple, bien que les parois d'équilibrage décrites soient essentiellement planes, des parois d'équilibrage non planes peuvent également être prévues, et les conceptions présentées ci-dessus peuvent être déclinées en trois dimensions. Plus généralement, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Ombrière (10), en particulier pour le support de panneaux photovoltaïques, comprenant une structure de toit (12) inclinée de façon à présenter une partie haute (14) et une partie basse (18), et une pluralité de poteaux (24) pour l'ancrage au sol (22) de la structure de toit (12), lesdits poteaux (24) soutenant la structure de toit (12) au niveau de la partie haute (14), l'ombrière (10) comprenant en outre au moins une paroi d'équilibrage (30) soutenue mécaniquement au moins par un des poteaux (24) et s'étendant en direction d'un autre des poteaux (24), l'au moins une paroi d'équilibrage (30) obturant 75% ou moins de la surface séparant ces deux poteaux (24).

2. Ombrière selon la revendication 1, dans laquelle la paroi d'équilibrage (30) est prévue à distance d'au moins une des extrémités des poteaux (24) entre lesquels elle s'étend, de préférence à distance des deux extrémités.

3. Ombrière selon la revendication 1 ou 2, dans laquelle la paroi d'équilibrage (30) obture 70% ou moins de la surface séparant lesdits deux poteaux, de préférence 60% ou moins, de préférence 50% ou moins, de préférence 40% ou moins, de préférence 30% ou moins, de préférence 20% ou moins.

4. Ombrière selon l'une quelconque des revendications 1 à 3, dans laquelle la partie basse (18) de la structure de toit (12) s'étend en porte-à-faux par rapport aux poteaux (24).

5. Ombrière selon l'une quelconque des revendications 1 à 4, dans laquelle les poteaux (24) sont agencés en une unique rangée.

6. Ombrière selon l'une quelconque des revendications 1 à 5, dans laquelle la hauteur (H30) de la paroi d'équilibrage (30) est comprise entre 2% et 100% de la hauteur (H24) des poteaux (24), de préférence entre 20% et 90%, de préférence encore entre 40% et 80%.

7. Ombrière selon l'une quelconque des revendications 1 à 6, dans laquelle la distance (H22) entre la paroi d'équilibrage (30) et l'extrémité libre des poteaux (24) est comprise entre 0% et 98% de la hauteur (H24) des poteaux (24), ou dans laquelle la paroi d'équilibrage (30) s'étend au maximum dans le tiers supérieur, optionnellement dans le quart supérieur, de la hauteur (H24) des poteaux (24).

8. Ombrière selon l'une quelconque des revendications 1 à 7, dans laquelle la structure de toit (12) forme avec les poteaux (24) un angle (T) strictement supérieur à 0° et inférieur ou égal à 90°.

9. Ombrière selon l'une quelconque des revendications 1 à 8, dans laquelle la paroi d'équilibrage (30) est verticale.

10. Ombrière selon l'une quelconque des revendications 1 à 9 dans laquelle, en projection sur les poteaux (24), la partie basse (18) est située à au moins deux mètres, de préférence au moins deux mètres et demi, de l'extrémité libre des poteaux (24).
